# EUROPEAN PATENT SPECIFICATION

(11) **EP 4 277 463 B1**
(45) Date of publication and mention of the grant of the patent: **18.11.2026**
(21) Application number: 22702057.5
(22) Date of filing: 14.01.2022
(51) Int. Cl.: A01J 5/007, A01J 5/013

(54) **QUALITY SENSOR FOR PREDICTING CLOTS IN MILK EXTRACTED FROM AN ANIMAL**
QUALITÄTSSENSOR ZUR VORHERSAGE VON GERINNUNGEN IN AUS EINEM TIER GEWONNENER MILCH
CAPTEUR DE QUALITÉ POUR PRÉDIRE DES CAILLOTS DANS LE LAIT EXTRAIT D'UN ANIMAL

(30) Priority: 15.01.2021 SE 2150028
(43) Date of publication of application: 22.11.2023
(73) Proprietor: DeLaval Holding AB, 147 21 Tumba (SE)
(72) Inventor: ANGLART, Dorota, 147 21 Tumba (SE); HALLÉN SANDGREN, Charlotte, 147 21 Tumba (SE)
(74) Representative: DeLaval International AB
(86) International application number: PCT/SE2022/050044
(87) International publication number: WO 2022/154743

(56) References cited:
- WO-A2-2014/083433
- US-A1- 2011 308 627
- US-A1- 2019 254 249
- US-B2- 8 261 597

## Description

### TECHNICAL FIELD

The present invention relates generally to milk quality monitoring. Especially, the invention relates to a quality sensor for predicting clots in the milk extracted from an animal.

### BACKGROUND

For health and hygienic reasons it is important that a dairy farmer has accurate and reliable information about the milk being produced at his/her facilities. Moreover, various regulatory frameworks demand that the milk placed on the consumer market meets certain quality standards. For example, milk extracted from animals with udder inflammation cannot be used in food production. However, there are few methods for generating predictions of generally accepted indicators of udder inflammation and poor milk quality, such as somatic cell count (SCC) or changes in milk homogeneity.

Traditionally, in manual milking, the milker pre-strips each quarter of the animal's udder and inspects the stripped milk before attaching the milking unit. During the inspection, the milker looks for deviations in the milk quality, such as clots, color changes, or other abnormalities. Thereby, the milker may identify sick cows and prevent abnormal milk from ending up in the bulk tank. In addition, regular milk samplings are typically performed in which the levels of somatic cells (i.e. white blood cells) are measured to monitor the udder health as well as milk quality.

Of course, the above visual inspection cannot be made in automatic milking systems, such as milking robots, where the cows are milked on a voluntary basis. Here, some of said quality aspects may be measured by sensors, for example electric conductivity and color.

However, it is challenging to automatically detect other kinds of deviations, such as milk clots, the presence of which is positively correlated with mastitis (udder inflammation).

EP 1 264 537discloses a method and a device for selecting milk.

Here, within a predetermined period of time, a flow of milk is guided into a measuring chamber with at least one filter and a detector unit. After the predetermined period of time, the flow of milk is guided past the measuring chamber in a bypass line. After the predetermined period of time, a surface of the filter is detected. Depending on the evaluation result of the detection, the milk flow is either directed to a collecting container for usable milk or discarded.

EP 1 273 224 describes a solution wherein, for the selection of milk, a predetermined milk volume of a milk flow is introduced into a measuring chamber with at least one detector unit. At least one area of the bottom surface of the measuring chamber is then detected, the detection is evaluated and, depending on the evaluation result, the milk flow either being directed to the collecting container for usable milk or being discarded.

Thus, the known solutions basically mimic the milker's visual inspection described above. This strategy has proven to be both time consuming and unreliable. More important, the milk quality from a particular animal cannot be predicted before the milk extraction has been initiated. Consequently, there is a risk that substandard milk enters the bulk tank even if the detector signals a quality-related problem.

US2019/254249A1 discloses a quality sensor where the electrical property measurement of the milk of the animal being milked is analyzed by an artificial intelligence method (e.g.: logistic regression, decision trees, neural networks, etc.), from which three possible results are returned: normal, abnormal, ill.

### SUMMARY

The object of the present invention is therefore to offer a solution that solves the above problem and enables efficient and reliable prediction of clots in the milk to be extracted from a particular animal, or in the milk that is currently being extracted from this animal.

According to one aspect of the invention, the object is achieved by a quality sensor according to claim 1 including a trained artificial neural network for predicting clots in milk extracted from an animal.

The above quality sensor is advantageous because it truly enables *prediction* of a milk quality to be expected in a future milking, i.e. a not yet initiated milking of an animal. Hence, already from the start, any milk of suspected poor quality can be diverted. As a result, no substandard milk risks being fed into the bulk tank.

Further, it is straightforward to repeatedly update the trained artificial neural network, for example based on measurement data generated by the milking apparatus. Thereby, the precision of the quality sensor may gradually improve over time.

According to one embodiment of this aspect of the invention, the trained artificial neural network is of feedforward type, for instance a multi-layer perceptron network applying a sigmoid function as an activation function.

According to the invention, the trained artificial neural network has weights that have been determined via a backpropagation training process involving scoring of densities of milk clot deposits on filters through which extracted milk has been passed during milk extraction processes in relation to training data expressing the set of input variables. Here, the scoring of the densities of milk clot deposits on the filters express output training data, i.e. to which degree the milk contains inhomogeneities in the form of so-called clots. Thereby, after adequate training, the trained artificial network captures relationships between the set of input variables and the clots to be detected.

The scoring may be effected in various ways. According to one embodiment of this aspect of the invention, the scoring of densities of milk clot deposits on the filters is based on: a visual classification of the milk clot deposits made by a human assessor, e.g. a veterinarian or an animal scientist; an automatic image classification of the milk clot deposits performed by a computer-implemented algorithm; an electric impedance measurement on the filter, either when the milk clot deposits thereon are wet, dry or both; a wet weight of the milk clot deposits; a dry weight of the milk clot deposits; and/or an enzyme content in the milk clot deposits. Thus, a highly reliable basis for classifying the milk clot deposits can be obtained.

According to the invention, the quality sensor contains an input interface configured to receive at least one input variable in the set of input variables from a milking apparatus used to extract milk from the animal. Naturally, the input variables received from the milking apparatus may originate from one or more earlier milkings as well as a current milking. Thereby, a large portion of the input variables may enter the quality sensor in a very convenient manner. Of course, this does not preclude parallel inputs of variables, i.e. from alternative sources and/or manual input. In any case, the input interface is preferably configured to convert and/or adapt one or more of the input variables before these are fed into the trained artificial neural network.

According to yet another embodiment of this aspect of the invention, the at least one characteristic reflecting the animal contains: at least one earlier estimate of a predicted degree of inhomogeneities generated by the trained artificial neural network in respect of the animal; a number of days in milk for the animal; an interval between consecutive milk extraction processes for the animal; and/or a parity number for the animal. Consequently, key animal aspects may be conveniently modelled by the trained artificial neural network.

According to still another embodiment of this aspect of the invention, the at least one characteristic reflecting the extracted milk contains: at least one udder quarter electric conductivity value registered during milk extraction from the animal; at least one mean udder quarter udder electric conductivity value for the animal determined based on milk extraction from the animal; a lactate dehydrogenase (LDH) measure for the animal; a parameter expressing a color of the milk extracted from the animal, either in at least one previous milking, the present, or both; a set of parameters expressing a respective color of the milk extracted from each udder quarter of the animal, either in at least one previous milking, the present, or both; and/or a somatic cell count in milk extracted from the animal. Thereby, key aspects of the milk may be conveniently modelled by the trained artificial neural network.

According to a further embodiment of this aspect of the invention, the at least one characteristic reflecting the process during which the milk was extracted contains: a duration of at least one milk extraction process for the animal, either at least one previous milking, the present, or both; a milk yield from the animal in at least one milk extraction process, either at least one previous milking, the present, or both; an expected milk yield from the animal in at least one milk extraction process, either at least one previous milking, the present, or both; a set of parameters expressing a respective expected milk yield from each udder quarter of the animal in at least one milk extraction process, either at least one previous milking, the present, or both; an expected rate of milk secretion in at least one milk extraction process for the animal, either at least one previous milking, the present, or both; a set of parameters expressing a respective expected rate of milk secretion from each udder quarter of the animal in at least one milk extraction process, either at least one previous milking, the present, or both; an udder quarter milk flow rate during a period of a milk extraction process for the animal, either at least one previous milking, the present, or both; a peak milk flow rate during at least one milk extraction process for the animal, either at least one previous milking, the present, or both; a set of parameters expressing a respective peak milk flow rate from each udder quarter of the animal in at least one milk extraction process, either at least one previous milking, the present, or both; an average udder quarter milk flow rate during at least one milk extraction process for the animal, either at least one previous milking, the present, or both; a set of parameters expressing a respective milk flow rate from each udder quarter of the animal during at least one milk extraction process, either at least one previous milking, the present, or both; a time required for attaching teatcups to the animal's teats in connection with at least one milk extraction process, either for at least one previous milking, the present, or both; an indication whether the animal has kicked off at least one teatcup in connection with at least one milk extraction process, either at least one previous milking, the present, or both; and/or an indication whether at least one udder quarter of the animal was not milked in at least one milk extraction process either at least one previous milking, the present, or both. Hence, key aspects of the milk extraction process may be conveniently modelled by the trained artificial neural network.

According to another aspect but not according to the invention, the object is achieved by a computer-implemented method of predicting inhomogeneities in milk extracted from an animal. The method involves receiving a set of input variables reflecting at least one characteristic of the animal, as such; at least one characteristic of the milk extracted - in the present milking session, in at least one earlier milking session, or both; and at least one characteristic of at least one process during which milk was extracted from the animal - i.e. the present milking session, at least one earlier milking session, or both. The method further involves feeding the set of input variables into a trained artificial neural network; and in response thereto, generating an estimate of a predicted degree of inhomogeneities in the milk. The advantages of this method, as well as the preferred embodiments thereof are apparent from the discussion above with reference to the proposed control unit.

According to a further aspect but not according to the invention, the object is achieved by a computer program loadable into a non-volatile data carrier communicatively connected to a processing unit. The computer program includes software for executing the above method when the program is run on the processing unit.

According to another aspect but not according to the invention, the object is achieved by a non-volatile data carrier containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates how an artificial neural network is trained according to one embodiment of the invention;
- Figure 2: shows a functional block diagram of a quality sensor according to one embodiment of the invention;
- Figure 3: shows a structural block diagram of the quality sensor according to one embodiment of the invention;
- Figures 4a-f: illustrate how filters may be employed for scoring different densities of milk clot deposits according to one embodiment of the invention; and
- Figure 5: illustrates, by means of a flow diagram, the method according to a preferred embodiment but not according to the invention.

### DETAILED DESCRIPTION

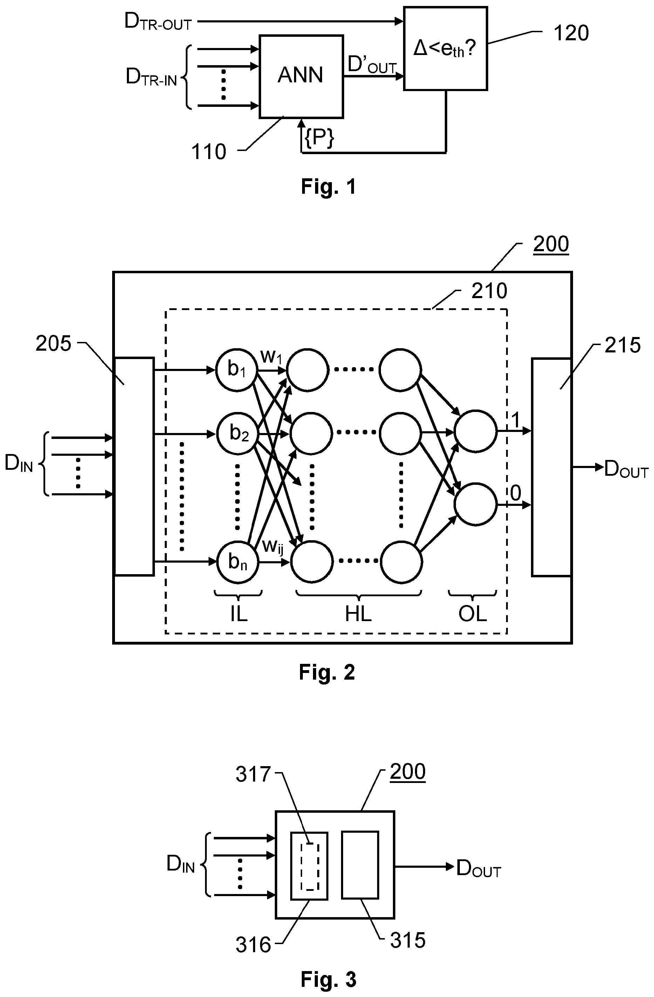

In Figure 1, we see a setup for training an artificial neural network (ANN) 110 to be included in a quality sensor 200 according to the invention after that the ANN 110 has been trained.

Figure 2 shows a functional block diagram of the quality sensor 200 according to one embodiment of the invention, which quality sensor 200 includes the trained ANN 210, i.e. a version of the ANN that has been modified via training as described below.

The setup of Figure 1 includes an ANN 110, which initially is untrained, i.e. a network structure where a respective bias b₁, b₂, ..., bₙ of each node/neuron has been randomly assigned and a respective weight w₁, ..., wᵢⱼ of each connection between the nodes/neurons has likewise been randomly assigned. The setup of Figure 1 further includes an evaluation unit 120 configured to determine if an output D'_{OUT} of the ANN 110 is sufficiently close to an actual output D_{TR-OUT} that is linked to a set of training data D_{IN-TR} fed into the ANN 110. Here, the ANN output D'_{OUT} is a prediction of the actual output D_{TR-OUT}. Ideally, a difference Δ between the ANN output D'_{OUT} and the actual output D_{TR-OUT} should be "sufficiently small", however not zero. Namely, this may result in so-called overtraining and render the trained ANN 210 poorly suited to handle input data being only slightly different from the sets of training data D_{IN-TR} used. If the difference Δ between the ANN output D'_{OUT} and the actual output D_{TR-OUT} is not yet "sufficiently small", i.e. the difference Δ is larger than an error threshold eₜₕ, the evaluation unit 120 is configured to generate a set of adjustment parameters {P}, which causes one or more of the weights w₁, ..., wᵢⱼ to be modified to a respective higher or lower value.

The ANN 110 is preferably of feedforward type, and may, in its most generic form, be implemented as a directed acyclic graph, i.e. a multilayer network where one or more edges skip layers. According to one embodiment of the invention, the ANN 110 is a standard multilayer perceptron (MLP) network including an input layer IL, a single hidden layer HL and an output layer OL. Naturally, any higher number than one hidden layers HLs is likewise conceivable according to the invention.

Preferably, if the ANN 110 is arranged to generate a binary output 0 or 1 respectively via the output layer OL, the ANN 110 is configured to apply a sigmoid activation function, where a resulting value larger than or equal to 0.5 produces the output 1 and a resulting value smaller than 0.5 produces the output 0. This corresponds to an estimate D_{OUT} of a predicted degree of inhomogeneities in the milk, where 0 represents no inhomogeneities/clots in the milk and 1 represents the occurrence of inhomogeneities/clots in the milk.

However, as will be discussed below, according to the invention, estimates D_{OUT} in any form of multi-level outputs from the ANN are equally well conceivable, i.e. more nuanced estimates of the predicted degree of inhomogeneities in the milk.

In addition, the estimate D_{OUT} generated by the ANN may be a vector containing a plurality of variables, for example one variable per udder quarter. Thus, the output from the ANN may have a format {Y1,Y2,Y3,Y4}, where Y1 designates a predicted degree of inhomogeneities in the milk from a first udder quarter, Y2 designates a predicted degree of inhomogeneities in the milk from a second udder quarter, Y3 designates a predicted degree of inhomogeneities in the milk from a third udder quarter and Y4 designates a predicted degree of inhomogeneities in the milk from a fourth udder quarter. For example, here, an output {0,0,1,0} could represent inhomogeneities/clots in the milk from the third udder quarter and no inhomogeneities/clots in the milk from the other udder quarters. Naturally, according to the invention such a vector-format output may also be combined with a multi-level output per variable.

According to the invention, the ANN 110 is trained with training data D_{TR-IN} reflecting a set of variables of the same type as a set of input variables D_{IN} that will be fed to the trained ANN 210 included in the quality sensor 200 during operation thereof.

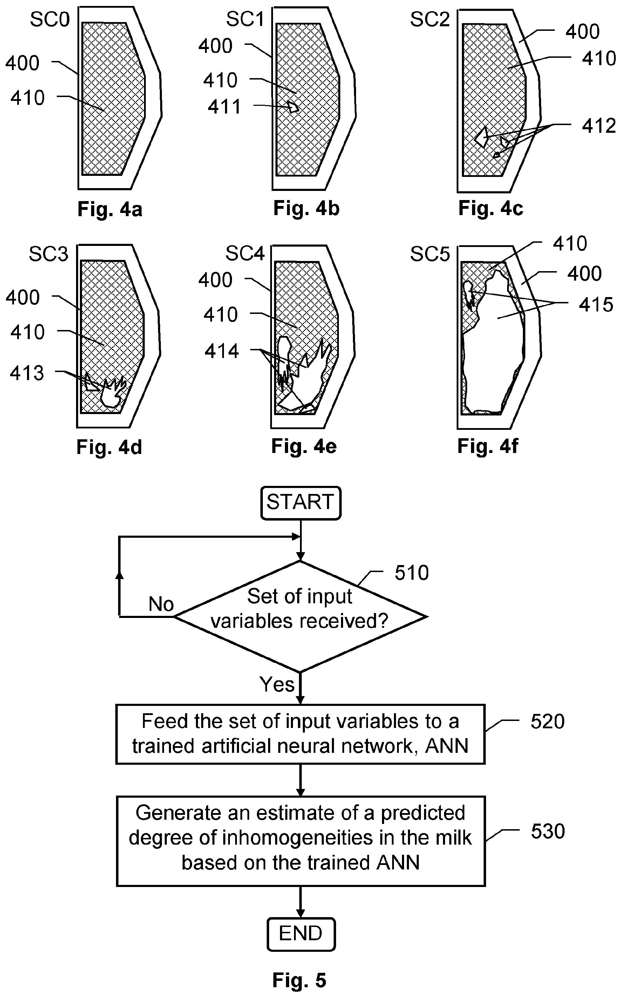

Referring now to Figures 4a to 4f, we see illustrations of how a filter 410 may be employed according to one embodiment of the invention to score inhomogeneities in the form different densities of milk clot deposits. According to one embodiment of the invention, the trained artificial neural network 210 of the quality sensor 200 has weights w₁, ..., wᵢⱼ that have been determined via a backpropagation training process involving scoring of different densities of milk clots on the filter 410. The filter 410 is mounted in a frame 400, which, in turn, is placed in a holder in a milk conduit where milk is transported in such a manner that extracted milk passes through the filter 410 during a milk extraction process. For example, the holder for the filter 400 may be arranged along a milk tube, preferably before a respective milk meter of each teat cup.

Figures 4a to 4f show the filter 410 after that extracted milk with different degrees of inhomogeneities has been passed through the filter 410.

In Figure 4a, there is no sign of clots on the filter 410. The extracted milk is therefore assigned a scoring SC0 designating no clots, or a lowest possible degree of inhomogeneities in the milk.

In Figure 4b, a fraction of a clot 411 is identified on the filter 410, and the extracted milk is assigned a scoring SC1 designating a lowest level of inhomogeneities being present in the milk. For example, the scoring SC1 may represent an aggregate area of deposits on the filter 410 equivalent to a single clot having a diameter smaller than 3 mm.

In Figure 4c, a mild amount of clots 412 is identified on the filter 410, and the extracted milk is assigned a scoring SC2 designating a second lowest level of inhomogeneities being present in the milk. For example, the scoring SC2 may represent an aggregate area of deposits on the filter 410 equivalent to a single clot having a diameter larger than 3 mm and smaller than 5 mm.

In Figure 4d, a moderate amount of clots 413 is identified on the filter 410, and the extracted milk is assigned a scoring SC3 designating a third lowest level of inhomogeneities being present in the milk. For example, the scoring SC3 may represent an aggregate area of deposits on the filter 410 equivalent to a single clot having a diameter larger than 5 mm and covering less than or equal to 10 % of a total area of the filter 410.

In Figure 4e, the filter 410 contains a heavy amount of clots 414, and the extracted milk is assigned a scoring SC4 designating a second highest level of inhomogeneities being present in the milk, which is above the third lowest level. For example, the scoring SC4 may represent an aggregate area of deposits on the filter 410 covering more than 10 % and less than 50 % of the total area of the filter 410.

In Figure 4f, the filter 410 contains a very heavy assemble of clots 415, and the extracted milk is assigned a scoring SC5 designating a highest level of inhomogeneities being present in the milk. For example, the scoring SC5 may represent an aggregate area of deposits on the filter 410 covering more than 50 % of the total area of the filter 410.

For each set of training data D_{IN-TR}, a respective scoring SC0, SC1, SC2, SC3, SC4 or SC5 is associated to express output training data D_{TR-OUT} linked thereto. Based on this, the ANN 110 is trained as described above such that it is transformed into the trained ANN 210.

The scorings SC0, SC1, SC2, SC3, SC4 or SC5, in turn, may be derived in various ways. According to one embodiment of the invention, a particular scoring SC0, SC1, SC2, SC3, SC4 or SC5 of a density of milk clot deposits 411, 412, 413, 414 and 415 respectively on the filter 410 is based on one or more of the following:
- a visual classification of the milk clot deposits 411, 412, 413, 414 and 415 respectively made by at least one human assessor, for example a veterinarian,
- an automatic image classification of the milk clot deposits 411, 412, 413, 414 and 415 respectively performed by a computer-implemented algorithm, for instance based on artificial intelligence (Al),
- an electric impedance measurement on the filter 410 when the milk clot deposits 411, 412, 413, 414 and 415 respectively are wet,
- an electric impedance measurement on the filter 410 when the milk clot deposits 411, 412, 413, 414 and 415 respectively are dry,
- a wet weight of the milk clot deposits 411, 412, 413, 414 and 415 respectively,
- a dry weight of the milk clot deposits 411, 412, 413, 414 and 415 respectively, and
- an enzyme content in the milk clot deposits 411, 412, 413, 414 and 415 respectively, which enzyme content may indicate an amount of leukocytes.

According to the invention, the set of training data D_{IN-TR} reflects at least one characteristic of the animal whose milk is to serve as a basis for training the ANN 110 in relation to the output training data D_{TR-OUT} expressed by the scorings SC0, SC1, SC2, SC3, SC4 and SC5.

According to the invention, the set of training data D_{IN-TR} also reflects at least one characteristic of the extracted milk serving as a basis for training the ANN 110 in relation to the output training data D_{TR-OUT} expressed by the scorings SC0, SC1, SC2, SC3, SC4 and SC5.

Additionally, according to the invention, the set of training data D_{IN-TR} reflects at least one characteristic of at least one process during which milk was extracted from the animal serving as a basis for training the ANN 110 in relation to the output training data D_{TR-OUT} expressed by the scorings SC0, SC1, SC2, SC3, SC4 and SC5.

The set of training data D_{IN-TR} consequently reflects the same type of variables as the set of input variables D_{IN} that will be fed to the trained ANN 210 included in the quality sensor 200 to generate an estimate D_{OUT} of a predicted degree of inhomogeneities in the milk.

The at least one characteristic of the animal in the set of training data D_{IN-TR} has been registered before the milking is initiated based upon which the scorings SC0, SC1, SC2, SC3, SC4 and SC5 are assigned. The at least one characteristic of the animal in the set of training data D_{IN-TR} may, according to embodiments of the invention relate to: a number of days in milk for the animal, an interval between consecutive milk extraction processes for the animal and/or a parity number for the animal.

The at least one characteristic of the extracted milk in the set of training data D_{IN-TR} may either have been registered before the milking is initiated, and thus relate to one or more earlier milkings, and/or be registered during the milking based upon which the scorings SC0, SC1, SC2, SC3, SC4 and SC5 are assigned. According to embodiments of the invention, the at least one characteristic of the extracted milk may relate to: at least one udder quarter electric conductivity value registered during milk extraction from the animal, at least one mean udder quarter electric conductivity value for the animal determined based on milk extraction from the animal, an LDH measure for the animal, a parameter expressing a color of the milk extracted from the animal, a set of parameters expressing a respective color of the milk extracted from each udder quarter of the animal, and/or a somatic cell count in milk extracted from the animal.

Analogously, the at least one characteristic of at least one process during which milk was extracted from the animal included in the set of training data D_{IN-TR} may either have been registered before the milking is initiated, and thus relate to one or more earlier milkings, and/or be registered during the milking based upon which the scorings SC0, SC1, SC2, SC3, SC4 and SC5 are assigned. According to embodiments of the invention, the at least one characteristic of at least one process during which milk was extracted from the animal may relate to: a duration of at least one milk extraction process for the animal, a milk yield from the animal in at least one milk extraction process, an expected milk yield from the animal in at least one milk extraction process, a set of parameters expressing a respective expected milk yield from each udder quarter of the animal in at least one milk extraction process, an expected rate of milk secretion in at least one milk extraction process for the animal, a set of parameters expressing a respective expected rate of milk secretion from each udder quarter of the animal in at least one milk extraction process, an udder quarter milk flow rate during a period of a milk extraction process for the animal, a peak milk flow rate during at least one milk extraction process for the animal, a set of parameters expressing a respective peak milk flow rate from each udder quarter of the animal in at least one milk extraction process, an average udder quarter milk flow rate during at least one milk extraction process for the animal, a set of parameters expressing a respective milk flow rate from each udder quarter of the animal during at least one milk extraction process, a time required for attaching teatcups to the animal's teats in connection with at least one milk extraction process, an indication whether the animal has kicked off at least one teatcup in connection with at least one milk extraction process, and/or an indication whether at least one udder quarter of the animal was not milked in at least one milk extraction process.

Before entering the set of training data D_{IN-TR} into the ANN 110, it may be necessary to adjust and/or transform one or more pieces of data in order to render the data useful for training. For example, numerical variables may need to be normalized. Furthermore, one or more variables may need to be transferred to the logarithmic domain.

Similarly, this type of adjustments and/or transformations may be needed when operating the quality sensor 200 and receiving the set of input variables D_{IN}. Therefore, the quality sensor 200 preferably contains an input interface 205 configured to adjust and/or transform at least one variable in the set of input variables D_{IN} before feeding the set of input variables D_{IN} into the trained artificial neural network 210.

According to the invention, in operation, the quality sensor 200 is configured to receive the set of input variables D_{IN}, which reflect at least one characteristic of the animal to be milked, that is being milked; at least one characteristic of the extracted milk, and at least one characteristic of at least process during which milk was extracted from the animal, either in the present milking, in at least one previous milking, or both.

The quality sensor 200 is further configured to feed the set of input variables D_{IN} into the trained ANN 210. In response thereto, the trained ANN 210 is configured to generate an estimate D_{OUT} of a predicted degree of inhomogeneities in the milk, for example as a first output 0 representing no inhomogeneities/no clots, and a second output 1 representing an occurrence of inhomogeneities/ clots.

Here, the scores SC0, SC1 and SC2 may for example be translated into the first output 0, and the scores SC3, SC4 and SC5 may be translated into the second output 1. However, technically, any other translation scheme is possible according to the invention. It is also feasible to generate an estimate D_{OUT} of the predicted degree of inhomogeneities in the milk that reflects three or more different degrees of inhomogeneities, say one degree corresponding to each of the six levels represented by the scores SC0, SC1, SC2, SC3, SC4 and SC5 respectively. Nevertheless, in practice, a binary output is deemed to be the most useful tool to determine whether or not the milk fulfills a particular quality standard.

According to the invention, the quality sensor 200 contains the above input interface 205, which is further configured to receive at least one input variable in the set of input variables D_{IN} from the milking apparatus that was used to extract the milk from the animal.

Moreover, the quality sensor 200 may contain an output interface 215 configured to provide the estimate D_{OUT} to external units and/or present the estimate D_{OUT} to a human operator.

Figure 3 shows a block diagram of the quality sensor 200 according to one embodiment of the invention. It is generally advantageous if the quality sensor 200 is configured to effect the above-described procedure in an automatic manner by executing a computer program 317. Therefore, the quality sensor 200 may include a memory unit 316, i.e. non-volatile data carrier, storing the computer program 317, which, in turn, contains software for making processing circuitry in the form of at least one processor 315 in the quality sensor 200 execute the actions mentioned in this disclosure when the computer program 317 is run on the at least one processor 315.

In order to sum up, and with reference to the flow diagram in Figure 5, we will now describe the computer-implemented method of predicting inhomogeneities in milk extracted from an animal.

A first step 510, checks if a set of input variables D_{IN} has been received. The set of input variables D_{IN} reflects at least one characteristic of the animal, at least one characteristic of the extracted milk, and at least one characteristic of at least one process during which milk was extracted from the animal.

The at least one characteristic of the animal has been registered before the milking is initiated, and may, according to embodiments relate to: at least one earlier estimate of predicted inhomogeneities in milk extracted from the animal generated by the trained artificial neural network, a number of days in milk for the animal, an interval between consecutive milk extraction processes for the animal, and/or a parity number for the animal.

The at least one characteristic of the extracted milk may either have been registered before the milking is initiated, and thus relate to one or more earlier milkings, and/or be registered during the milking in which the inhomogeneities are to be predicted. According to embodiments, the at least one characteristic of the extracted milk may relate to: at least one udder quarter electric conductivity value registered during milk extraction from the animal, at least one mean udder quarter electric conductivity value for the animal determined based on milk extraction from the animal, an LDH measure for the animal, a parameter expressing a color of the milk extracted from the animal, a set of parameters expressing a respective color of the milk extracted from each udder quarter of the animal, and/or a somatic cell count in milk extracted from the animal.

Analogous to the above, the at least one characteristic of at least one process during which milk was extracted from the animal may either have been registered before the milking is initiated, and thus relate to one or more earlier milkings, and/or be registered during the milking in which the inhomogeneities are to be predicted. According to embodiments, the at least one characteristic of at least one process during which milk was extracted from the animal may relate to: a duration of at least one milk extraction process for the animal, a milk yield from the animal in at least one milk extraction process, an expected milk yield from the animal in at least one milk extraction process, a set of parameters expressing a respective expected milk yield from each udder quarter of the animal in at least one milk extraction process, an expected rate of milk secretion in at least one milk extraction process for the animal, a set of parameters expressing a respective expected rate of milk secretion from each udder quarter of the animal in at least one milk extraction process, an udder quarter milk flow rate during a period of a milk extraction process for the animal, a peak milk flow rate during at least one milk extraction process for the animal, a set of parameters expressing a respective peak milk flow rate from each udder quarter of the animal in at least one milk extraction process, an average udder quarter milk flow rate during at least one milk extraction process for the animal, a set of parameters expressing a respective milk flow rate from each udder quarter of the animal during at least one milk extraction process, a time required for attaching teatcups to the animal's teats in connection with at least one milk extraction process, an indication whether the animal has kicked off at least one teatcup in connection with at least one milk extraction process, and/or an indication whether at least one udder quarter of the animal was not milked in at least one milk extraction process.

If, in step 510, it is found that the set of input variables D_{IN} has been received, a step 520 follows. Otherwise, the procedure loops back and stays in step 510.

In step 520, the set of input variables D_{IN} is fed into the above-described trained artificial neural network.

Subsequently, in response the set of input variables D_{IN} the trained artificial neural network generates an estimate D_{OUT} of a predicted degree of inhomogeneities in the milk in a step 530.

Thereafter, the procedure ends.

All of the process steps, as well as any sub-sequence of steps, described with reference to Figure 5 may be controlled by means of a programmed processor.

Variations to the disclosed embodiments can be understood and effected by those skilled in the art in practicing the claimed invention, within the scope of the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A quality sensor (200) including a trained artificial neural network for predicting clots in milk extracted from an animal, the quality sensor (200) being configured to:
receive a set of input variables (D_{IN}) reflecting:
at least one characteristic of the animal,
at least one characteristic of the extracted milk of the animal, and
at least one characteristic of at least one process during which milk was extracted from the animal;
feed the set of input variables (D_{IN}) into the trained artificial neural network (210); and wherein the trained artificial neural network is configured to
generate an estimate (D_{OUT}) of a predicted degree of clots in the milk and wherein the quality sensor comprises an input interface (205) configured to receive at least one input variable in the set of input variables (D_{IN}) from a milking apparatus used to extract milk from the animal and wherein the trained artificial neural network (210) has weights (w₁, ..., wᵢⱼ) that have been determined via a backpropagation training process involving scoring (SCO, SC1, SC2, SC3, SC4, SC5) of densities of milk clot deposits (411, 412, 413, 414, 415) on filters (410) through which extracted milk has been passed during milk extraction processes in relation to training data (D_{TR-IN}) expressing the set of input variables, the scoring (SC0, SC1, SC2, SC3, SC4, SC5) of the densities of milk clot deposits (411, 412, 413, 414, 415) on the filters (410) expressing output training data (D_{TR-OUT}).

2. The quality sensor (200) according to claim 1, wherein the trained artificial neural network (210) is of feedforward type.

3. The quality sensor (200) according to any of claims 1 and 2, wherein the scoring (SC0, SC1, SC2, SC3, SC4, SC5) of densities of milk clot deposits (411, 412, 413, 414, 415) on the filters (410) is based on at least one of:
**a visual classification** of the milk clot deposits (411, 412, 413, 414, 415) by a human assessor,
an automatic image classification of the milk clot deposits (411, 412, 413, 414, 415) by a computer-implemented algorithm,
an electric impedance measurement on the filter (410) when the milk clot deposits (411, 412, 413, 414, 415) are wet,
an electric impedance measurement on the filter (410) when the milk clot deposits (411, 412, 413, 414, 415) are dry,
a wet weight of the milk clot deposits (411, 412, 413, 414, 415),
a dry weight of the milk clot deposits (411, 412, 413, 414, 415), and
an enzyme content in the milk clot deposits (411, 412, 413, 414, 415).

4. The quality sensor (200) according to any one of the preceding claims, wherein the at least one characteristic reflecting the animal comprises at least one of:
at least one earlier estimate (D_{OUT}) generated by the trained artificial neural network (210) in respect of the animal,
a number of days in milk for the animal,
an interval between consecutive milk extraction processes for the animal, and
a parity number for the animal.

5. The quality sensor (200) according to any one of the preceding claims, wherein the at least one characteristic reflecting the extracted milk comprises at least one of:
at least one udder quarter electric conductivity value registered during milk extraction from the animal,
at least one mean udder quarter electric conductivity value for the animal determined based on milk extraction from the animal,
a lactate dehydrogenase measure for the animal,
a parameter expressing a color of the milk extracted from the animal,
a set of parameters expressing a respective color of the milk extracted from each udder quarter of the animal, and
a somatic cell count in milk extracted from the animal.

6. The quality sensor (200) according to any one of the preceding claims, wherein the at least one characteristic reflecting the process during which the milk was extracted comprises at least one of:
a duration of at least one milk extraction process for the animal,
a milk yield from the animal in at least one milk extraction process,
an expected milk yield from the animal in at least one milk extraction process,
a set of parameters expressing a respective expected milk yield from each udder quarter of the animal in at least one milk extraction process,
an expected rate of milk secretion in at least one milk extraction process for the animal,
a set of parameters expressing a respective expected rate of milk secretion from each udder quarter of the animal in at least one milk extraction process,
an udder quarter milk flow rate during a period of a milk extraction process for the animal,
a peak milk flow rate during at least one milk extraction process for the animal,
a set of parameters expressing a respective peak milk flow rate from each udder quarter of the animal in at least one milk extraction process,
an average udder quarter milk flow rate during at least one milk extraction process for the animal,
a set of parameters expressing a respective milk flow rate from each udder quarter of the animal during at least one milk extraction process,
a time required for attaching teatcups to the animal's teats in connection with at least one milk extraction process,
an indication whether the animal has kicked off at least one teatcup in connection with at least one milk extraction process, and
an indication whether at least one udder quarter of the animal was not milked in at least one milk extraction process.

## Patentansprüche

1. Qualitätssensor (200), einschließlich eines trainierten künstlichen neuronalen Netzes zum Vorhersagen von Gerinnseln in von einem Tier gewonnener Milch, wobei der Qualitätssensor (200) konfiguriert ist zum:
Empfangen eines Satzes von Eingangsvariablen (D_{IN}), die Folgendes widerspiegeln:
mindestens eine Eigenschaft des Tieres,
mindestens eine Eigenschaft der gewonnenen Milch des Tieres, und
mindestens eine Eigenschaft mindestens eines Vorgangs, während dessen Milch von dem Tier gewonnen wurde;
Einspeisen des Satzes von Eingangsvariablen (D_{IN}) in das trainierte künstliche neuronale Netz (210); und wobei das trainierte künstliche neuronale Netz konfiguriert ist zum
Generieren einer Schätzung (D_{OUT}) eines vorhergesagten Grades an Gerinnseln in der Milch und wobei der Qualitätssensor eine Eingangsschnittstelle (205) umfasst, die konfiguriert ist, um mindestens eine Eingangsvariable in dem Satz von Eingangsvariablen (D_{IN}) von einer Melkvorrichtung zu empfangen, die verwendet wird, um Milch von dem Tier zu gewinnen, und wobei das trainierte künstliche neuronale Netz (210) Gewichte (w₁, ..., wᵢⱼ) aufweist, die über einen Rückwärtspropagierungs-Trainingsvorgang bestimmt wurden, der eine Bewertung (SC0, SC1, SC2, SC3, SC4, SC5) von Dichten von Milchgerinnselablagerungen (411, 412, 413, 414, 415) auf Filtern (410), durch die gewonnene Milch während Milchgewinnungsvorgängen geleitet wurde, in Bezug auf Trainingsdaten (D_{TR-IN}), die den Satz von Eingangsvariablen ausdrücken, einbezieht, wobei die Bewertung (SC0, SC1, SC2, SC3, SC4, SC5) der Dichten von Milchgerinnselablagerungen (411, 412, 413, 414, 415) auf den Filtern (410) Ausgangstrainingsdaten (D_{TR-OUT}) ausdrückt.

2. Qualitätssensor (200) nach Anspruch 1, wobei das trainierte künstliche neuronale Netz (210) vom Vorwärtskopplungstyp ist.

3. Qualitätssensor (200) nach einem der Ansprüche 1 und 2, wobei die Bewertung (SC0, SC1, SC2, SC3, SC4, SC5) der Dichten von Milchgerinnselablagerungen (411, 412, 413, 414, 415) auf den Filtern (410) auf mindestens einem basiert von:
einer visuellen Klassifizierung der Milchgerinnselablagerungen (411, 412, 413, 414, 415) durch einen menschlichen Beurteiler,
einer automatischen Bildklassifizierung der Milchgerinnselablagerungen (411, 412, 413, 414, 415) durch einen computerimplementierten Algorithmus,
einer elektrischen Impedanzmessung an dem Filter (410), wenn die Milchgerinnselablagerungen (411, 412, 413, 414, 415) nass sind,
einer elektrischen Impedanzmessung an dem Filter (410), wenn die Milchgerinnselablagerungen (411, 412, 413, 414, 415) trocken sind,
einem Nassgewicht der Milchgerinnselablagerungen (411, 412, 413, 414, 415),
einem Trockengewicht der Milchgerinnselablagerungen (411, 412, 413, 414, 415) und
einem Enzymgehalt in den Milchgerinnselablagerungen (411, 412, 413, 414, 415).

4. Qualitätssensor (200) nach einem der vorstehenden Ansprüche, wobei die mindestens eine das Tier widerspiegelnde Eigenschaft mindestens eines umfasst von:
mindestens einer früheren Schätzung (D_{OUT}), die durch das trainierte künstliche neuronale Netz (210) in Bezug auf das Tier generiert wird,
einer Anzahl von Laktationstagen für das Tier,
einem Intervall zwischen aufeinanderfolgenden Milchgewinnungsvorgängen für das Tier und
einer Paritätsnummer für das Tier.

5. Qualitätssensor (200) nach einem der vorstehenden Ansprüche, wobei die mindestens eine Eigenschaft, die die gewonnene Milch widerspiegelt, mindestens eines umfasst von:
mindestens einem elektrischen Leitfähigkeitswert eines Euterviertels, der während der Milchgewinnung von dem Tier registriert wird,
mindestens einem mittleren elektrischen Leitfähigkeitswert eines Euterviertels für das Tier, der basierend auf der Milchgewinnung von dem Tier bestimmt wird,
einem Lactatdehydrogenasemaß für das Tier,
einem Parameter, der eine Farbe der von dem Tier gewonnenen Milch ausdrückt,
einem Satz von Parametern, der eine jeweilige Farbe der aus jedem Euterviertel des Tieres gewonnenen Milch ausdrückt, und
einer somatischen Zellzahl in von dem Tier gewonnener Milch.

6. Qualitätssensor (200) nach einem der vorstehenden Ansprüche, wobei die mindestens eine Eigenschaft, die den Vorgang widerspiegelt, während dessen die Milch gewonnen wurde, mindestens eines umfasst von:
einer Dauer wenigstens eines Milchgewinnungsvorgangs für das Tier,
einer Milchausbeute von dem Tier in mindestens einem Milchgewinnungsvorgang,
einer erwarteten Milchausbeute von dem Tier in mindestens einem Milchgewinnungsvorgang,
einem Satz von Parametern, die eine jeweilige erwartete Milchausbeute aus jedem Euterviertel des Tieres in mindestens einem Milchgewinnungsvorgang ausdrücken,
einer erwarteten Milchsekretionsrate in mindestens einem Milchgewinnungsvorgang für das Tier,
einem Satz von Parametern, der eine jeweilige erwartete Milchsekretionsrate aus jedem Euterviertel des Tieres in mindestens einem Milchgewinnungsvorgang ausdrückt,
einer Milchdurchflussrate eines Euterviertels während eines Zeitraums eines Milchgewinnungsvorgangs für das Tier,
einer Spitzenmilchdurchflussrate während mindestens eines Milchgewinnungsvorgangs für das Tier,
einem Satz von Parametern, der eine jeweilige Spitzenmilchdurchflussrate aus jedem Euterviertel des Tieres in mindestens einem Milchgewinnungsvorgang ausdrückt,
einer durchschnittliche Milchdurchflussrate eines Euterviertels während mindestens eines Milchgewinnungsvorgangs für das Tier,
einem Satz von Parametern, der eine jeweilige Milchdurchflussrate aus jedem Euterviertel des Tieres während mindestens eines Milchgewinnungsvorgangs ausdrückt,
einer für das Anbringen von Zitzenbechern an den Zitzen des Tieres in Verbindung mit mindestens einem Milchgewinnungsvorgang erforderlichen Zeit,
einer Angabe, ob das Tier in Verbindung mit mindestens einem Milchgewinnungsvorgang mindestens einen Zitzenbecher abgetreten hat, und
einer Angabe, ob mindestens ein Euterviertel des Tieres in mindestens einem Milchgewinnungsvorgang nicht gemolken wurde.

## Revendications

1. Capteur de qualité (200) comportant un réseau neuronal artificiel entraîné permettant de prédire des caillots dans du lait extrait d'un animal, le capteur de qualité (200) étant configuré pour :
recevoir un ensemble de variables d'entrée (D_{IN}) reflétant :
au moins une caractéristique de l'animal,
au moins une caractéristique du lait extrait de l'animal, et
au moins une caractéristique d'au moins un procédé pendant lequel du lait a été extrait de l'animal ;
alimenter l'ensemble de variables d'entrée (D_{IN}) dans le réseau neuronal artificiel entraîné (210) ; et dans lequel le réseau neuronal artificiel entraîné est configuré pour
générer une estimation (D_{OUT}) d'un degré prédit de caillots dans le lait et dans lequel le capteur de qualité comprend une interface d'entrée (205) configurée pour recevoir au moins une variable d'entrée dans l'ensemble de variables d'entrée (D_{IN}) en provenance d'un appareil de traite utilisé pour extraire du lait de l'animal et dans lequel le réseau neuronal artificiel entraîné (210) a des poids (w₁, ..., wᵢⱼ) qui ont été déterminés par l'intermédiaire d'un procédé d'entraînement par rétropropagation impliquant la notation (SC0, SC1, SC2, SC3, SC4, SC5) de densités de dépôts de caillots de lait (411, 412, 413, 414, 415) sur des filtres (410) à travers lesquels on a fait passer du lait extrait pendant des procédés d'extraction de lait par rapport à des données d'entraînement (D_{TR-IN}) exprimant l'ensemble de variables d'entrée, la notation (SC0, SC1, SC2, SC3, SC4, SC5) des densités de dépôts de caillots de lait (411, 412, 413, 414, 415) sur les filtres (410) exprimant des données d'entraînement de sortie (D_{TR-OUT}).

2. Capteur de qualité (200) selon la revendication 1, dans lequel le réseau neuronal artificiel entraîné (210) est de type correction aval.

3. Capteur de qualité (200) selon l'une quelconque des revendications 1 et 2, dans lequel la notation (SC0, SC1, SC2, SC3, SC4, SC5) de densités de dépôts de caillots de lait (411, 412, 413, 414, 415) sur les filtres (410) est en fonction d'au moins l'un parmi :
une classification visuelle des dépôts de caillots de lait (411, 412, 413, 414, 415) par un évaluateur humain,
une classification automatique d'images des dépôts de caillots de lait (411, 412, 413, 414, 415) par un algorithme implémenté par ordinateur,
une mesure d'impédance électrique sur le filtre (410) lorsque les dépôts de caillots de lait (411, 412, 413, 414, 415) sont mouillés,
une mesure d'impédance électrique sur le filtre (410) lorsque les dépôts de caillots de lait (411, 412, 413, 414, 415) sont secs,
un poids mouillé des dépôts de caillots de lait (411, 412, 413, 414, 415),
un poids sec des dépôts de caillots de lait (411, 412, 413, 414, 415), et
une teneur en enzymes dans les dépôts de caillots de lait (411, 412, 413, 414, 415).

4. Capteur de qualité (200) selon l'une quelconque des revendications précédentes, dans lequel l'au moins une caractéristique reflétant l'animal comprend au moins l'un parmi :
au moins une estimation antérieure (D_{OUT}) générée par le réseau neuronal artificiel entraîné (210) par rapport à l'animal,
un nombre de jours de lactation pour l'animal,
un intervalle entre des procédés d'extraction de lait consécutifs pour l'animal, et
un nombre de portées pour l'animal.

5. Capteur de qualité (200) selon l'une quelconque des revendications précédentes, dans lequel l'au moins une caractéristique reflétant le lait extrait comprend au moins l'un parmi :
au moins une valeur de conductivité électrique de quartier enregistrée pendant une extraction de lait sur l'animal,
au moins une valeur de conductivité électrique moyenne pour l'animal déterminée en fonction d'une extraction de lait sur l'animal,
une mesure de lactate déshydrogénase pour l'animal,
un paramètre exprimant une couleur du lait extrait de l'animal,
un ensemble de paramètres exprimant une couleur respective du lait extrait de chaque quartier de pis de l'animal, et
un comptage de cellules somatiques dans du lait extrait de l'animal.

6. Capteur de qualité (200) selon l'une quelconque des revendications précédentes, dans lequel l'au moins une caractéristique reflétant le procédé pendant lequel le lait a été extrait comprend au moins l'un parmi :
une durée d'au moins un procédé d'extraction de lait pour l'animal,
un rendement laitier de l'animal dans au moins un procédé d'extraction de lait,
un rendement laitier attendu de l'animal dans au moins un procédé d'extraction de lait,
un ensemble de paramètres exprimant un rendement laitier attendu respectif provenant de chaque quartier de pis de l'animal dans au moins un procédé d'extraction de lait,
un taux attendu de sécrétion de lait dans au moins un procédé d'extraction de lait pour l'animal,
un ensemble de paramètres exprimant un taux attendu respectif de sécrétion de lait provenant de chaque quartier de pis de l'animal dans au moins un procédé d'extraction de lait,
un débit de lait de quartier de pis pendant une période d'un procédé d'extraction de lait pour l'animal,
un débit de lait maximal pendant au moins un procédé d'extraction de lait pour l'animal,
un ensemble de paramètres exprimant un débit de lait maximal respectif provenant de chaque quartier de pis de l'animal dans au moins un procédé d'extraction de lait,
un débit de lait de quartier de pis moyen pendant au moins un procédé d'extraction de lait pour l'animal,
un ensemble de paramètres exprimant un débit de lait respectif provenant de chaque quartier de pis de l'animal pendant au moins un procédé d'extraction de lait,
un temps requis pour l'attachement de gobelets-trayeurs aux trayons de l'animal en rapport avec au moins un procédé d'extraction de lait,
une indication indiquant si l'animal a fait tomber au moins un gobelet-trayeur en rapport avec au moins un procédé d'extraction de lait, et
une indication indiquant si au moins un quartier de pis de l'animal n'a pas été trait dans au moins un procédé d'extraction de lait.
